# EUROPÄISCHE PATENTSCHRIFT

(11) **EP 2 909 925 B1**
(45) Veröffentlichungstag und Bekanntmachung des Hinweises auf die Patenterteilung: **01.04.2020**
(21) Anmeldenummer: 13780061.1
(22) Anmeldetag: 30.09.2013
(51) Int. Cl.: H02M 3/158, H02J 7/34, H02M 5/458, H02M 1/00

(54) **MITTELS GLEICHRICHTER UND HOCH/TIEFSETZSTELLER GESPEISTER ENERGIESPEICHER IM ZWISCHENKREIS EINES ANTRIEBSSYSTEMS**
RECTIFIER AND BUCK/BOOST CONVERTER FED ENERGY STORAGE IN THE DC-LINK OF A DRIVE SYSTEM
ACCUMULATEUR D'ÉNERGIE DANS UN CIRCUIT INTERMÉDIAIRE CC D'UN CONVERTISSEUR D'ENTRAÎNEMENT ALIMENTÉ PAR UN REDRESSEUR ET UN CONVERTISSEUR ÉLEVATEUR/ABAISSEUR

(30) Priorität: 22.10.2012 DE 102012020578
(43) Veröffentlichungstag der Anmeldung: 26.08.2015
(73) Patentinhaber: SEW-EURODRIVE GmbH & Co. KG, 76646 Bruchsal (DE)
(72) Erfinder: HAUCK, Matthias, 68723 Schwetzingen (DE); LAMPERT, Christian, 76646 Bruchsal (DE); SCHIFFMANN, Sebastian, 76709 Kronau (DE); SCHMIDT, Josef, 76676 Graben-Neudorf (DE); WEBER, Jochen, 68723 Plankstadt (DE); ZÖLLER, Thomas, 76646 Bruchsal (DE); TRITSCHLER, Daniel, 76646 Bruchsal (DE)
(86) Internationale Anmeldenummer: PCT/EP2013/002929
(87) Internationale Veröffentlichungsnummer: WO 2014/063774

(56) Entgegenhaltungen:
- EP-A1- 2 578 876
- EP-A2- 1 343 246
- EP-A2- 1 538 736
- WO-A2-2013/117304
- CN-A- 102 403 913
- DE-A1- 10 248 971
- DE-A1- 19 524 005
- DE-A1-102009 014 495
- JP-A- H0 438 192
- US-A1- 2009 102 286

## Beschreibung

Die Erfindung betrifft eine Antriebsanordnung mit Energiespeicher.

Es ist allgemein bekannt, dass eine Antriebsanordnung einen Zwischenkreiskondensator zur Abpufferung der vom Wechselspannungsnetz verursachten Spannungsänderungen aufweist.

Aus der JP H04 38192 A ist eine Antriebsanordnung mit einem zwischen einem netzgespeisten Gleichrichter und einem einen Wechselrichter speisenden Zwischenkreis angeordneten DC/DC-Wandler bekannt.

Aus der DE 102 48 971 A1 ist ein Frequenzumrichter für einen drehstrombetriebenen Motor, insbesondere eines Hebezeugs, bekannt.

Aus der EP 1 538 736 A2 ist ein Antriebssystem bekannt.

Aus der DE 195 24 005 A1 ist ein Motorbetriebsregler und bidirektionaler Isolations-Gleichspannungsumformer bekannt.

Aus der DE 10 2009 014495 A1 ist ein elektrisches Antriebssystem mit Energiepufferung bekannt.

Aus der EP 1 343 246 A2 ist eine Schaltungsanordnung zur Speisung eines Elektromotors bekannt.

Aus der CN 102 403 913 A ist ein im Zwischenkreis eines Umrichters angeordneter Energiespeicher bekannt.

Aus der US 2009/102286 A1 ist bekannt mehrere Wechselrichter aus einem Gleichspannungskreis zu versorgen, wobei jeder Wechselrichter generatorisch erzeugte Energie in den Gleichspannungskreis rückspeisen darf.

Aus der nachveröffentlichten EP 2 578 876 A1 ist ein Pitchsystem für eine Windenergieanlage bekannt, wobei ein DC/DC-Wandler zwischen einem Gleichrichter und einen Wechselrichter angeordnet ist.

Aus der nachveröffentlichten WO 2013/117304 A2 ist ein Antriebssystem mit Energiespeicher bekannt.

Der Erfindung liegt daher die Aufgabe zugrunde, eine Antriebsanordnung mit Energiespeicher weiterzubilden, wobei der Umweltschutz verbessert sein soll und gleichzeitig die Kosten gering gehalten werden sollen.

Erfindungsgemäß wird die Aufgabe bei der Antriebsanordnung mit Energiespeicher nach den in Anspruch 1 angegebenen Merkmalen gelöst.

Wichtige Merkmale der Erfindung bei der Antriebsanordnung mit Energiespeicher nach Anspruch 1 sind, dass die Antriebsanordnung mit Energiespeicher ausgeführt ist,
wobei die Antriebsanordnung einen ersten Zwischenkreis, insbesondere Gleichspannungszwischenkreis, aufweist, und einen aus dem Zwischenkreis speisbaren Wechselrichter, mit welchem ein erster Motor speisbar ist,
wobei der Zwischenkreis aus einem DC/DC-Wandler speisbar ist, welcher von einem netzgespeisten Gleichrichter versorgt ist,
insbesondere wobei mittels des DC/DC-Wandlers der Leistungszufluss vom Netz durch den DC/DC-Wandler steuerbar, insbesondere begrenzbar, ist.

Von Vorteil ist dabei, dass der Speicher direkt an der Zwischenkreisspannung angeschlossen ist und die zugehörige Ladespannung auf höherem Niveau liegen darf als die Spitzenwerte des den DC/DC-Wandler versorgenden Netzes. Denn durch den steuerbaren Schalter und die Induktivität ist eine entsprechende Anpassung der Spannungsniveaus ermöglicht.

Bei der Ausgestaltung weist der DC/DC-Wandler eine parallel zum Ausgang des netzgespeisten Gleichrichters geschaltete Halbbrücke aus zwei in Reihe geschalteten steuerbaren Schaltern auf, deren Mittelanzapfung mittels der Induktivität L mit der Mittelanzapfung einer weiteren Halbbrücke aus zwei in Reihe geschalteten steuerbaren Schaltern verbunden ist, wobei diese weitere Halbbrücke (T3, T4) am Zwischenkreis anliegt. Von Vorteil ist dabei, dass eine pulsweitenmodulierte Ansteuerung ermöglicht ist und somit eine sehr hohe Regelgüte beim Hinregeln auf den gewünschten Sollwert erreichbar ist.

Bei einer vorteilhaften Ausgestaltung weist der DC/DC-Wandler eingangsseitig, also parallel zur weiteren Halbbrücke einen Pufferkondensator auf. Von Vorteil ist dabei, dass eine geglättete Spannung zur Verfügung gestellt wird.

Bei der anfangs genannten Ausgestaltung ist ein Mittel zur Erfassung des durch die Induktivität fließenden Stromes vorgesehen,
insbesondere dessen erfasste Werte einer Steuereinheit zuführbar sind, welche die Ansteuersignale für die Schalter Halbbrücke erzeugt. Von Vorteil ist dabei, dass eine Regelung des Stromes auf einen Sollwert hin ermöglicht ist oder eine Regelung der gewünschten Spannung durch entsprechendes Beeinflussen der Schaltfrequenz des Schalters.

Bei einer vorteilhaften Ausgestaltung ist der Speicher S ein Akkumulator, ein Kondensator oder eine Batterie ist. Von Vorteil ist dabei, dass eine Hochvoltbatterie oder ein Speicher bei einer von der Zwischenkreisspannung unterschiedlichen Betriebsspannung oder Nennspannung verwendbar ist. Insbesondere ist der am Speicher anliegende Spannungsbetrag größer als der Effektivwert der den Gleichrichter speisenden Netzspannung.

Bei einer vorteilhaften Ausgestaltung ist jedem Schalter der Halbbrücken eine Diode, insbesondere Freilaufdiode, parallel zugeschaltet. Von Vorteil ist dabei, dass der Strompfad auch die Diode enthalten darf.

Bei einer vorteilhaften Ausgestaltung ist dem Speicher ein Verbraucher parallel zugeschaltet. Von Vorteil ist dabei, dass ein in Summe generatorischer Betrieb des ersten Motors nicht zu einer Überladung des Speichers führt, wenn der Verbraucher und die Hilfsantriebe mehr verbrauchen als die generatorisch in den Zwischenkreis eingespeiste durchschnittliche Leistung.

Bei der anfangs genannten Ausgestaltung ist der erste Zwischenkreis über einen DC/DC-Wandler aus einem Gleichrichter speisbar, insbesondere wobei der Gleichrichter von einer Wechselspannungsquelle speisbar ist. Von Vorteil ist dabei, dass das mittlere Spannungsniveau des ersten Zwischenkreises vorgebbar ist.

Bei einer vorteilhaften Ausgestaltung ist ein Mittel zur Erfassung der Spannung im ersten Zwischenkreis vorgesehen, wobei eine Steuereinheit einen Schalter derart ansteuert, dass bei Überschreiten eines kritischen Spannungswertes Energie aus dem Zwischenkreis an einen Bremswiderstand abgeführt wird,
insbesondere wobei der Bremswiderstand ein PTC Material aufweist. Von Vorteil ist dabei, dass der Zwischenkreis gegen das Auftreten einer zu hohen Spannung geschützt ist.

Bei der anfangs genannten Ausgestaltung wird aus dem ersten Zwischenkreis ein zweiter Zwischenkreis über eine Diode gespeist, aus dem wiederum ein Wechselrichter versorgt ist, mit dem ein zweiter Motor speisbar ist. Von Vorteil ist dabei, dass infolge der Diode Rückkopplungen verhindert sind und somit die Schwingungsneigung des gesamten Systems unterdrückt ist. Somit sind auch lange Verbindungskabel zwischen dem ersten Zwischenkreis und dem zweiten Zwischenkreis einsetzbar.

Die Erfindung wird nun anhand von Abbildungen näher erläutert:

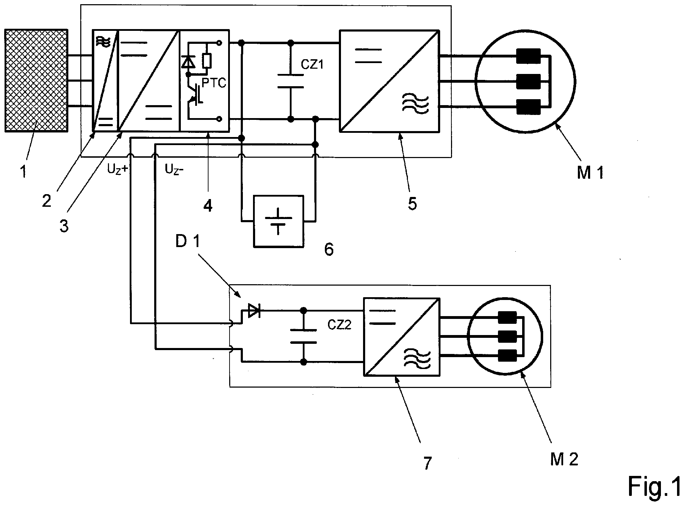

In der Figur 1 ist ein Antriebssystem mit Energiespeicheranordnung 6 gezeigt.

In der Figur 2 ist der DC/DC-Wandler 3 näher dargestellt.

Wie in den Figuren gezeigt, wird aus der mehrphasigen Wechselspannung 1, also einem Versorgungsnetz, ein Gleichrichter 2 gespeist, der wiederum einen DC/DC-Wandler 3 speist. Diesem ist ausgangsseitig ein erster Zwischenkreiskondensator CZ1 zugschaltet und parallel hierzu eine Brems-Chopperanordnung 4 mit PTC-Bremswiderstand. Somit wird ab einem kritischen Spannungswert am ersten Zwischenkreiskondensator CZ1 mittels des Brems-Choppers Energie an den Bremswiderstand abgeführt, der mittels der Ausführung aus PTC-Material sich selbst gegen Überlastung schützt, weil bei zu hoher an ihn abgeführter Leistung sein Widerstandswert sich erhöht und auf diese Weise der Strom begrenzbar ist.

Solange die Spannung am ersten Zwischenkreiskondensator CZ1, also die Spannung zwischen dem oberen Zwischenkreispotential U_Z+ und dem unteren Zwischenkreispotential U_Z- unterhalb des kritischen Wertes verbleibt, wird keine Energie an den Bremswiderstand abgeführt.

Der aus dem ersten Zwischenkreiskondensator CZ1 versorgte Wechselrichter 5 speist an seiner AC-Ausgangsseite einen ersten Motor M1. Im generatorischen Betrieb des Motors M1 wird Energie über den Wechselrichter 5 vom Motor M1 an den ersten Zwischenkreiskondensator CZ1 abgeführt.

Ebenfalls am ersten Zwischenkreiskondensator CZ1 ist parallel eine Hilfsantriebsanordnung angeschlossen, wobei diese über eine Diode D1 versorgt ist, die den Strom einem zweiten Zwischenkreiskondensator CZ2 zuführt, der einen zweiten Wechselrichter 7 speist, aus dem ein zweiter Motor M2 versorgt wird. Eine Rückspeisung generatorischer Energie von diesem zweiten Zwischenkreis an den ersten Zwischenkreis ist daher nicht vorgesehen.

Außerdem ist dem ersten Zwischenkreiskondensator CZ1 auch eine Energiespeicheranordnung 6 parallel zugeschaltet, die beispielsweise aus Doppelschichtkondensatoren besteht. Somit ist der erste Zwischenkreis nicht nur für Sekundenbruchteile sondern für längere Zeitabschnitte abpufferbar.

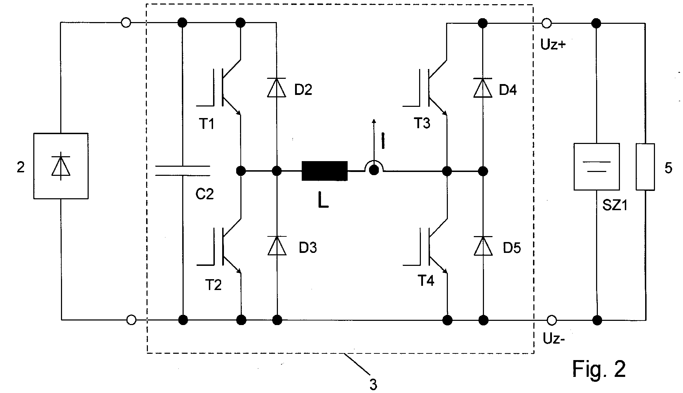

In Figur 2 ist der DC/DC-Wandler 3 näher dargestellt.

Dieser weist einen eingangsseitigen Pufferkondensator C2 auf, der die Ausgangsspannung des Gleichrichters 2 glättet und aus dem eine Halbbrücke versorgt wird, die einen steuerbaren Schalter T1, insbesondere Transistor, insbesondere IGBT, und einen mit diesem in Reihe geschalteten steuerbaren Schalter T2, insbesondere Transistor, insbesondere IGBT, aufweist, wobei jedem dieser Schalter (T1, T2) jeweils eine Diode (D2, D3) jeweils ausgangsseitig, insbesondere also zwischen Drain und Source beziehungsweise zwischen Kollektor und Emitter, parallel zugeschaltet ist.

Dieser ersten Halbbrücke schließt sich eine Induktivität L an, die wiederum über eine weitere, zweite Halbbrücke mit dem ersten Zwischenkreis verbunden ist. Diese zweite Halbbrücke besteht wiederum aus einer Reihenschaltung aus zwei steuerbaren Schaltern (T3, T4), insbesondere Transistor, insbesondere IGBT, wobei jedem dieser Schalter (T3, T4) jeweils eine Diode (D4, D5) jeweils ausgangsseitig, insbesondere also zwischen Drain und Source beziehungsweise zwischen Kollektor und Emitter, parallel zugeschaltet ist.

Mit beiden Halbbrücken wird durch pulsweitenmodulierte Ansteuersignale für die Schalter T1,T2 und/oder die Schalter T3,T4 der Strom I in der Induktivität L beeinflusst. Der Istwert des Stromes wird erfasst und einem Regler zugeführt, der ihn auf den gewünschten Sollwert regelt, indem die Ansteuersignale für die Schalter T1,T2,T3 und T4 geeignet gestellt werden.

Der von der ersten Halbbrücke erzeugte Strom I wird also einer Induktivität L zugeführt, wobei der Strom I erfasst wird. Der erfasste Istwert des Stromes I wird einem Regler zugeführt, der den Strom auf den gewünschten Sollwert hin regelt, indem er vorzugsweise die Einschaltdauer der Ansteuersignale, insbesondere der pulsweitenmodulierten Ansteuersignale, für die Schalter (T1, T2) entsprechend stellt.

Der Strom I wird einer weiteren Halbbrücke zugeführt, welche wiederum aus einer Reihenschaltung aus zwei steuerbaren Schaltern (T3, T4), insbesondere Transistor, insbesondere IGBT, besteht, wobei jedem dieser Schalter (T3, T4) jeweils eine Diode (D4, D5) jeweils ausgangsseitig, insbesondere also zwischen Drain und Source beziehungsweise zwischen Kollektor und Emitter, parallel zugeschaltet ist.

Ausgangsseitig ist der weiteren Halbbrücke am ersten Zwischenkreis ein Speicher S, insbesondere Kondensator, Batterie oder Akkumulator, zugeschaltet und ebenso der Wechselrichter 5, der Hilfsantrieb (D1, CZ2, 7, M2) und/oder ein Verbraucher RL, beispielsweise eine elektronische Schaltung, wie Steuerung oder dergleichen. Vorzugsweise ist der Speicher S als Hochvoltkondensatorspeicher, Hochvoltbatterie oder Hochvoltakkumulator ausgeführt, der eine Ladespannung von bis zu 800 Volt benötigt. Vorzugsweise kommt eine Serienschaltung von Doppelschichtkondensatoren zum Einsatz.

Die Energiespeicheranordnung 6 ist wegen der Parallelschaltung mit dem ersten Zwischenkreiskondensator CZ1 somit in der Lage, eine große Menge an Energie abzuspeichern beziehungsweise abzupuffern.

Der DC/DC-Wandler 3 ist in der Lage, aus dem Netz 1 dem Zwischenkreis (U_Z+, U_Z-) Energie zuzuführen.

Mittels des DC/DC-Wandlers 3 ist die netzseitig über den Gleichrichter 2 und DC/DC-Wandler 3 an den ersten Zwischenkreis zugeführte Energie bei einer höheren Spannung zuführbar als die Spitzenspannung des versorgenden Netzes 1 beträgt. Auf diese Weise ist der Energiespeicher wirkungsgradmäßig besser betreibbar.

Mittels der Diode D1 ist der Zwischenkreis des ersten Zwischenkreiskondensators CZ1 entkoppelt vom Hilfszwischenkreis, so dass keine Rückkopplungen zwischen dem Speicher S, dem zweiten Zwischenkreiskondensator CZ2 oder dem Versorgungsnetz auftreten können.

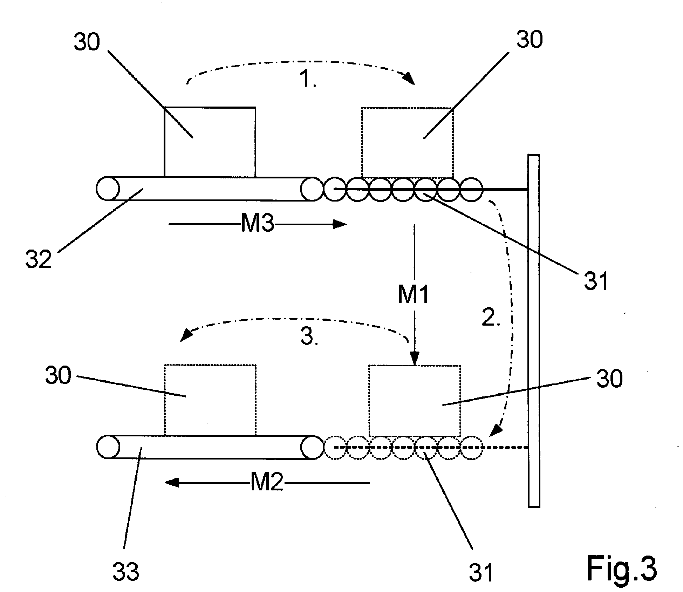

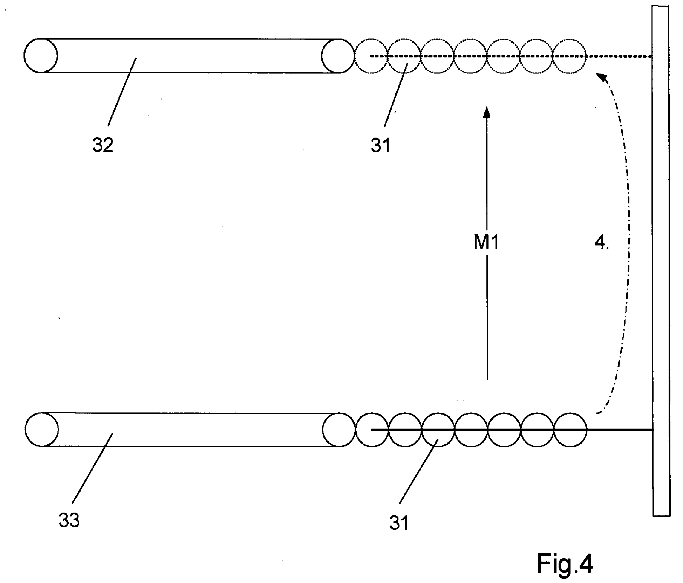

Wie in Figur 3 gezeigt, ist der erste Motor M1 als Hubwerksantrieb ausführbar. Somit ist dieser motorisch zum Heben einer Last und generatorisch zum Senken einer Last betreibbar. Wie in Figur 3 gezeigt, werden Objekte von einem Hilfsantrieb mit Motor M3 in einem ersten Schritt auf eine Hebebühne 31 befördert, in einem zweiten Schritt vom Hubwerksantrieb mit Motor M1 nach unten befördert, also von einer oberen Position zu einer unteren Position befördert, in einem dritten Schritt von einem weiteren Hilfsantrieb mit Motor M2 aus der Hebebühne 31 herausbefördert und von einem weiteren Hilfsantrieb mit Motor M2 schlussendlich wegbefördert. Im letzten Schritt wird die leere Hebebühne 31 von der unteren Position zur oberen Position vom Hubwerksantrieb mit Motor M1 nach oben wieder zurück befördert, wie in Figur 4 gezeigt. Die Motoren M2 und M3 treiben dabei Förderbänder (32, 33) an. Hierbei tritt eine in Summe generatorische Leistung auf, da beim Absenken des jeweiligen Objektes mehr Energie in den ersten Zwischenkreis gespeist wird als beim Heben der leeren Hebebühne, wie in Figur 4 gezeigt, des Hubwerks erforderlich ist. Zum Auffordern auf die Hebebühne wird der Motor M3 eingesetzt. Zum Abfordern wird der Motor M2 eingesetzt.

Daher ist zumindest ein Hilfsantrieb, umfassend den Motor M2 samt zugehörigem Wechselrichter 7 aus dem zweiten Zwischenkreis versorgbar und ist beispielsweise als Horizontalantrieb oder sonstiger Förderantrieb eingesetzt und wird nur motorisch betrieben. Denn die Diode D1 erlaubt kein generatorisches Betreiben des Hilfsantriebs.

Der DC/DC-Wandler 3 ermöglicht, dass der erste Zwischenkreis auf einem gewünschten mittleren Spannungsniveau gehalten wird, beispielsweise ein im Vergleich zur Spitzenspannung der mehrphasigen Wechselspannung 1 höheres Spannungsniveau. Somit wird der Betriebsbereich oder Stellbereich des Energiespeichers 6 gut ausnutzbar.

Wenn von dem Hilfsantrieb weniger Leistung verbraucht wird als in ihn generatorisch eingespeist wird durch den Wechselrichter 5, ist Leistung an die Energiespeicheranordnung 6 abführbar, wobei aus dem Speicher S wiederum ein Verbraucher RL, wie beispielsweise eine übergeordnete Steuerung oder dergleichen, versorgbar ist.

Wenn die erste Zwischenkreisspannung unter einen vorgebbaren Wert absinkt, wird vom DC/DC-Wandler 3 Energie in den Zwischenkreis eingespeist. Die Steuerung des Leistungsflusses wird von einer Steuereinheit ausgeführt, der der am ersten Zwischenkreiskondensator anliegende erfasste Spannungswert zugeführt wird und welche Steuersignale über eine Steuerleitung an den DC/DC-Wandler 3 übermittelt.

Die vom Gleichrichter bereit gestellte Ausgangsspannung wird vom Kondensator C2 gepuffert.

Der Energiespeicher 6 ist als kapazitiver Energiespeicher ausgeführt, beispielsweise durch Serien- und/oder Parallelschaltung von Kondensatoren, wie Doppelschichtkondensatoren, insbesondere Ultra-Caps. Da die Kapazität sehr groß ist und zum zweiten Zwischenkreis hin eine Diode D1 vorgesehen ist, sind lange Kabel zwischen dem ersten und zweiten Zwischenkreis vorsehbar, ohne dass Schwingneigung auftritt.

Der vom DC/DC-Wandler 3 bewirkte Leistungsfluss vom Netz zur Ausgangsseite des DC/DC-Wandlers 3 hin ist steuerbar mittels entsprechender Ansteuerung der Schalter des DC/DC-Wandlers 3. Die am ersten Zwischenkreiskondensator CZ1 erfasste Spannung ist daher erfassbar mittels eines Spannungssensors, so dass die über einen oder mehrere Zyklen gemittelte erfasste Spannung auf einen Sollwert hinregelbar ist. Hierbei ist unter Zyklen ein zyklisches Betreiben der Antriebsanordnung zu verstehen, also ein regelmäßiges generatorisches und motorischen Betrieben des Motors M1, also Heben und Senken einer Last. Aus dem erfassten Strom und aus der erfassten Spannung wird hierbei die aktuelle Leistung ermittelt und diese auf den vorgegebenen Wert hin geregelt.

### Bezugszeichenliste

- 1: mehrphasige Wechselspannung, Versorgungsnetz
- 2: Gleichrichter
- 3: DC/DC-Wandler
- 4: Brems-Chopperanordnung mit PTC-Bremswiderstand
- 5: Wechselrichter
- 6: Energiespeicheranordnung
- 7: Wechselrichter

- CZ1: erster Zwischenkreiskondensator
- CZ2: zweiter Zwischenkreiskondensator
- C2: Pufferkondensator
- S: Speicher, insbesondere Kondensator, Batterie oder Akkumulator
- D1: Diode
- D2: Diode
- D3: Diode
- D4: Diode
- D5: Diode
- T1: steuerbarer Schalter, insbesondere Transistor, insbesondere IGBT
- T2: steuerbarer Schalter, insbesondere Transistor, insbesondere IGBT
- T3: steuerbarer Schalter, insbesondere Transistor, insbesondere IGBT
- T4: steuerbarer Schalter, insbesondere Transistor, insbesondere IGBT
- RL: Verbraucher, wie beispielsweise übergeordnete Steuerung
- M1: erster Motor
- M2: zweiter Motor

- U_Z+: oberes Zwischenkreispotential
- U_Z-: oberes Zwischenkreispotential

## Patentansprüche

1. Antriebsanordnung mit Energiespeicher,
wobei die Antriebsanordnung einen ersten Zwischenkreis, also Gleichspannungszwischenkreis, und einen aus dem ersten Zwischenkreis gespeisten Wechselrichter (5) aufweist, mit welchem ein erster Motor speisbar ist,
wobei der Zwischenkreis aus einem DC/DC-Wandler (3) der Antriebsanordnung gespeist ist, welcher von einem netzgespeisten Gleichrichter (2) der Antriebsanordnung versorgt ist, wobei mittels des DC/DC-Wandlers (3) der Leistungszufluss vom netzgespeisten Gleichrichter durch den DC/DC-Wandler steuerbar, insbesondere begrenzbar, ist,
**wobei der DC/DC-Wandler**
- **eingangsseitig eine Halbbrücke von steuerbaren Halbleiterschaltern aufweist und**
- **ausgangsseitig eine weitere Halbbrücke von steuerbaren Halbleiterschaltern aufweist,**
wobei die Mittelabgriffe der beiden Halbbrücken mittels einer Induktivität (L) verbunden sind, deren Strom mittels eines mit der Induktivität in Reihe geschalteten Stromsensors erfasst wird,
wobei eine Energiespeicheranordnung (6) der Antriebsanordung mit dem ersten Zwischenkreis verbunden ist, wobei die Energiespeicheranordnung (6) einen Speicher S aufweist und parallel zu einem Zwischenkreiskondensator (CZ1) des ersten Zwischenkreises geschaltet ist,
wobei aus dem ersten Zwischenkreis ein zweiter Zwischenkreis der Antriebsanordnung über eine Diode gespeist wird, aus dem ein weiterer Wechselrichter (7) versorgt ist, mit dem ein zweiter Motor speisbar ist.

2. Antriebsanordnung nach Anspruch 1,
**dadurch gekennzeichnet, dass**
die Halbleiterschalter MOSFET oder IGBT sind.

3. Antriebsanordnung nach mindestens einem der vorangegangenen Ansprüche,
**dadurch gekennzeichnet, dass**
die Energiespeicheranordnung (6) eine kapazitive Energiespeicheranordnung (6) ist.

4. Antriebsanordnung nach mindestens einem der vorangegangenen Ansprüche,
**dadurch gekennzeichnet, dass**
der DC/DC-Wandler (3) eine parallel zum Speicher S geschaltete Halbbrücke aus zwei in Reihe geschalteten steuerbaren Schaltern aufweist, deren Mittelanzapfung mittels der Induktivität (L) mit der Mittelanzapfung einer weiteren Halbbrücke aus zwei in Reihe geschalteten steuerbaren Schaltern verbunden ist, wobei diese weitere Halbbrücke (T1, T2) von der Eingangsseite oder Ausgangsseite des Gleichrichters (2) speisbar ist.

5. Antriebsanordnung nach mindestens einem der vorangegangenen Ansprüche,
**dadurch gekennzeichnet, dass**
der DC/DC-Wandler (3) eingangsseitig, also parallel zur weiteren Halbbrücke einen Pufferkondensator (C2) aufweist.

6. Antriebsanordnung nach mindestens einem der vorangegangenen Ansprüche,
**dadurch gekennzeichnet, dass**
die mittels des Stromsensors erfassten Werte einer Steuereinheit als Ladestromwert beim Beladen des Speichers zugeführt wird, welche die Ansteuersignale für die Schalter der Halbbrücke erzeugt abhängig vom erfassten Ladestrom und/oder von einer erfassten Ladespannung und/oder von der daraus bestimmten Leistung, also dem Produkt des Ladestroms und der Ladespannung.

7. Antriebsanordnung nach mindestens einem der vorangegangenen Ansprüche,
**dadurch gekennzeichnet, dass**
der Speicher S ein Akkumulator, ein Kondensator oder eine Batterie ist.

8. Antriebsanordnung nach mindestens einem der vorangegangenen Ansprüche,
**dadurch gekennzeichnet, dass**
jedem Schalter der Halbbrücken eine Diode, also Freilaufdiode, parallel zugeschaltet ist.

9. Antriebsanordnung nach mindestens einem der vorangegangenen Ansprüche,
**dadurch gekennzeichnet, dass**
dem Speicher ein Verbraucher, wie eine **übergeordnete Steuerung,** parallel zugeschaltet ist.

10. Antriebsanordnung nach mindestens einem der vorangegangenen Ansprüche,
**dadurch gekennzeichnet, dass**
der Gleichrichter (2) von einer Wechselspannungsquelle speisbar ist.

11. Antriebsanordnung nach mindestens einem der vorangegangenen Ansprüche,
**dadurch gekennzeichnet, dass**
ein Mittel zur Erfassung der Spannung im ersten Zwischenkreis vorgesehen ist, wobei eine Steuereinheit einen Schalter derart ansteuert, dass bei Überschreiten eines kritischen Spannungswertes Energie aus dem Zwischenkreis an einen Bremswiderstand abgeführt wird,
insbesondere wobei der Bremswiderstand ein PTC Material aufweist.

12. Antriebsanordnung nach mindestens einem der vorangegangenen Ansprüche,
**dadurch gekennzeichnet, dass**
ein Mittel zur Erfassung der Spannung am Speicher vorgesehen ist, insbesondere zum Erfassen der Ladespannung des Speichers.

## Claims

1. Drive assembly comprising an energy storage device,
wherein the drive assembly has a first DC link, i.e. a DC-voltage DC link, and an inverter (5), which is fed from the first DC link and by which a first motor can be fed,
wherein the DC link is fed from a DC-to-DC converter (3) of the drive assembly, said converter being powered by a mains-powered rectifier (2) of the drive assembly,
wherein the power inflow from the mains-powered rectifier through the DC-to-DC converter can be controlled, in particular limited, by means of the DC-to-DC converter (3),
wherein the DC-to-DC converter has:
- a half-bridge of controllable semiconductor switches on the input side, and
- a further half-bridge of controllable semiconductor switches on the output side,
wherein the centre taps of the two half-bridges are connected by means of an inductor (L), the current of which is detected by means of a current sensor wired in series with the inductor,
wherein an energy storage assembly (6) of the drive assembly is connected to the first DC link,
wherein the energy storage assembly (6) has an storage device S and is wired in parallel with a DC link capacitor (CZ1) of the first DC link,
wherein a second DC link of the drive assembly is fed from the first DC link via a diode, a further inverter (7) being powered from said second DC link and a second motor being able to be fed by said further inverter.

2. Drive assembly according to claim 1,
**characterised in that**
the semiconductor switches are MOSFETs or IGBTs.

3. Drive assembly according to at least one of the preceding claims,
**characterised in that**
the energy storage assembly (6) is a capacitive energy storage assembly (6).

4. Drive assembly according to at least one of the preceding claims,
**characterised in that**
the DC-to-DC converter (3) has a half-bridge of two controllable switches wired in series, said half-bridge being wired in parallel with the storage device S and the mid-tap of said switches being connected, by means of the inductor (L), to the mid-tap of a further half-bridge of two controllable switches wired in series, said further half-bridge (T1, T2) being able to be fed by the input side or output side of the rectifier (2).

5. Drive assembly according to at least one of the preceding claims,
**characterised in that**
the DC-to-DC converter (3) has a buffer capacitor (C2) on the input side, i.e. in parallel with the further half-bridge.

6. Drive assembly according to at least one of the preceding claims,
**characterised in that**
the values detected by means of the current sensor are supplied to a control unit as the charging current value when charging the storage device, said control unit generating the actuation signals for the switches of the half-bridge depending on the detected charging current and/or on a detected charging voltage and/or on the power determined therefrom, i.e. the product of the charging current and the charging voltage.

7. Drive assembly according to at least one of the preceding claims,
**characterised in that**
the storage device S is an accumulator, a capacitor or a battery.

8. Drive assembly according to at least one of the preceding claims,
**characterised in that**
a diode, i.e. a free-wheeling diode, is connected in parallel with each switch of the half-bridges.

9. Drive assembly according to at least one of the preceding claims,
**characterised in that**
a load, such as a superordinate controller, is connected in parallel with the storage device.

10. Drive assembly according to at least one of the preceding claims,
**characterised in that**
the rectifier (2) can be fed by an AC voltage source.

11. Drive assembly according to at least one of the preceding claims,
**characterised in that**
a means is provided for detecting the voltage in the first DC link, a control unit actuating a switch in such a way that energy is carried away from the DC link to a braking resistor when a critical voltage value is exceeded,
the braking resistor in particular having a PTC material.

12. Drive assembly according to at least one of the preceding claims,
**characterised in that**
a means is provided for detecting the voltage at the storage device, in particular for detecting the charging voltage of the storage device.

## Revendications

1. Agencement d'entraînement avec un moyen de stockage d'énergie,
lequel agencement d'entraînement présente un premier circuit intermédiaire, c'est-à-dire un circuit intermédiaire à courant continu, et un onduleur (5) alimenté par le premier circuit intermédiaire et par lequel un premier moteur peut être alimenté,
dans lequel le circuit intermédiaire est alimenté par un convertisseur continu/continu (3) de l'agencement d'entraînement, qui est alimenté par un redresseur (2) de l'agencement d'entraînement alimenté par le réseau,
dans lequel le convertisseur continu/continu (3) permet de commander, en particulier de limiter la puissance fournie par le redresseur alimenté par le réseau à travers le convertisseur continu/continu,
dans lequel le convertisseur continu-continu présente
- du côté entrée un demi-pont de commutateurs à semi-conducteurs commandables et
- du côté sortie un autre demi-pont de commutateurs à semi-conducteurs commandables,
dans lequel les prises centrales des deux demi-ponts sont reliées au moyen d'une inductance (L) dont le courant est détecté au moyen d'un capteur de courant connecté en série avec l'inductance,
dans lequel un agencement de stockage d'énergie (6) de l'agencement d'entraînement est relié au premier circuit intermédiaire,
dans lequel l'agencement de stockage d'énergie (6) présente un moyen de stockage S et est connecté en parallèle avec un condensateur de circuit intermédiaire (CZ1) du premier circuit intermédiaire,
dans lequel un deuxième circuit intermédiaire de l'agencement d'entraînement est alimenté par une diode à partir du premier circuit intermédiaire, à partir duquel est alimenté un autre onduleur (7) par lequel un deuxième moteur peut être alimenté.

2. Agencement d'entraînement selon la revendication 1,
**caractérisé en ce**
**que** les commutateurs à semi-conducteurs sont des MOSFET ou des IGBT.

3. Agencement d'entraînement selon au moins l'une des revendications précédentes,
**caractérisé en ce**
**que** l'agencement de stockage d'énergie (6) est un agencement de stockage d'énergie capacitif (6).

4. Agencement d'entraînement selon au moins l'une des revendications précédentes,
**caractérisé en ce**
**que** le convertisseur continu-continu (3) présente un demi-pont connecté en parallèle avec le moyen de stockage S et constitué de deux commutateurs commandables connectés en série, dont la prise médiane est reliée au moyen de l'inductance (L) à la prise médiane d'un autre demi-pont constitué de deux commutateurs commandables connectés en série, cet autre demi-pont (T1, T2) pouvant être alimenté par le côté entrée ou le côté sortie du redresseur (2).

5. Agencement d'entraînement selon au moins l'une des revendications précédentes,
**caractérisé en ce**
**que** le convertisseur continu-continu (3) présente un condensateur tampon (C2) du côté entrée, c'est-à-dire en parallèle avec l'autre demi-pont.

6. Agencement d'entraînement selon au moins l'une des revendications précédentes,
**caractérisé en ce**
**que** les valeurs détectées au moyen du capteur de courant sont amenées en tant que valeur de courant de charge lors de la charge du moyen de stockage à une unité de commande qui génère les signaux de commande pour les commutateurs du demi-pont en fonction du courant de charge détecté et/ou d'une tension de charge détectée et/ou de la puissance déterminée à partir de ceux-ci, c'est-à-dire du produit du courant de charge et de la tension de charge.

7. Agencement d'entraînement selon au moins l'une des revendications précédentes,
**caractérisé en ce**
**que** le moyen de stockage S est un accumulateur, un condensateur ou une batterie.

8. Agencement d'entraînement selon au moins l'une des revendications précédentes,
**caractérisé en ce**
**qu'**une diode, c'est-à-dire une diode de roue libre, est connectée en parallèle avec chaque commutateur des demi-ponts.

9. Agencement d'entraînement selon au moins l'une des revendications précédentes,
**caractérisé en ce**
**qu'**un consommateur, tel qu'une commande de niveau supérieur, est connecté en parallèle avec le moyen de stockage.

10. Agencement d'entraînement selon au moins l'une des revendications précédentes,
**caractérisé en ce**
**que** le redresseur (2) peut être alimenté par une source de tension alternative.

11. Agencement d'entraînement selon au moins l'une des revendications précédentes,
**caractérisé en ce**
**qu'**il est prévu un moyen pour détecter la tension dans le premier circuit intermédiaire, une unité de commande commandant un commutateur de telle sorte que, lorsqu'une valeur de tension critique est dépassée, de l'énergie est évacuée du circuit intermédiaire sur une résistance de freinage,
la résistance de freinage présentant en particulier un matériau à coefficient de température positif (PTC).

12. Agencement d'entraînement selon au moins l'une des revendications précédentes,
**caractérisé en ce**
**qu'**il est prévu un moyen pour détecter la tension au moyen de stockage, en particulier pour détecter la tension de charge du moyen de stockage.
